# EUROPEAN PATENT SPECIFICATION

(11) **EP 4 536 730 B1**
(45) Date of publication and mention of the grant of the patent: **12.11.2025**
(21) Application number: 23750748.8
(22) Date of filing: 18.07.2023
(51) Int. Cl.: C08G 59/56

(54) **LOW DENSITY POTTING ADHESIVE**
VERGUSSKLEBER MIT NIEDRIGER DICHTE
ADHÉSIF D'ENROBAGE À FAIBLE DENSITÉ

(30) Priority: 19.07.2022 EP 22185841
(43) Date of publication of application: 16.04.2025
(73) Proprietor: 3M Innovative Properties Company, Saint Paul, Minnesota 55133-3427 (US)
(72) Inventor: ELGIMIABI, Sohaib, 41453 Neuss (DE); MANZO, Cyrus S., Manila 1634 (PH)
(74) Representative: Bergen, Katja
(86) International application number: PCT/IB2023/057340
(87) International publication number: WO 2024/018387

(56) References cited:
- WO-A1-2020/061436
- US-A1- 2022 033 570
- US-A1- 2022 041 797

## Description

### Technical Field

The disclosure relates to curable two-part lightweight potting compositions precursor and the lightweight potting compositions obtained therefrom. Further, the present disclosure further relates to a method for insert potting. Moreover, the present disclosure further relates to a use of the curable lightweight potting compositions and its precursors as described herein for potting inserts, as adhesive in bonding and joining parts, or as an edge or reinforcement filler for honeycomb composite structures.

### Background

Transportation vehicles, such as automobiles, watercraft and, in particular, aircrafts frequently contain low weight materials to reduce fuel consumption. To achieve this purpose, sandwich composites with honeycomb core structures are frequently employed instead of solid structures. Also, in the construction of buildings such honeycomb structures have found wide application. Typically, the honeycomb core structure is formed by a metal, e.g. Aluminium, or fibreglass or composites, and the cells between the honeycomb cores are void. The size of the void cells in a honeycomb structure influences the mechanical properties of the structure. The bigger the size the greater the weight reduction but the greater may be the loss of mechanical strength. Void cells in honeycomb structures may typically range from 5 mm up to 10 cm in at least one or all three dimensions. To counteract the potential loss of mechanical strength compared to solid structures, the cells of the honeycomb structure are partially or completely filled with filler materials (core fillers or void fillers).

Epoxy resin-based compositions may be used for this purpose, for example those described in WO 2010/117669 A1. The external surfaces of the honeycomb structures are often covered by facesheets, i.e. layers of resins, for example epoxy resins or phenolic resins, to further improve the overall stability of the honeycomb structures. Honeycomb structures covered by face sheets are also termed sandwich composites with a honeycomb core. Composite materials, in particular prepregs (preimpregnated fibers) are increasingly used as face sheets because of their good fire-retardant properties which are particularly important for applications in the aerospace industry.

Furthermore, materials suitable for applications in the aerospace industry and, in particular, for aircraft interiors need to meet a highly demanding property profile. This includes, *inter alia,* good mechanical properties and high compressive strength a high flame retardation and low emission of smoke and toxic fumes when burning while also being lightweight. Thus, composite structures comprising a honeycomb structure including voids filled with a void filler and covered on both sides with prepregs are very common in aerospace applications.

In this conjunction, curable lightweight compositions are employed in a multitude of applications such as adhesive, honeycomb void fillers, honeycomb composite edge fillers, or for potting inserts. Usually, for each of these applications, specialized compositions and products exist. However, apart from the desire in the art for specialized products having improved properties, there also exists a desire in the art for products which may cover not only one application, but a range of two or even more applications. Furthermore, there exists a desire for an improved composition for potting inserts which allows for an easier handling and easier insert of the potting insert.

WO 2020/061436 A1 discloses a composition comprising a polythiol curing agent, an epoxy-containing compound and a second curing agent, which may be tertiary amines such as DABCO or quaternary amines such as tetrabutyl ammonium bromide.

### Summary

The present disclosure provides a curable lightweight potting adhesive composition precursor, comprising
a first part (A) comprising
   (i) at least one first epoxy curing agent;
   (ii) at least one first curing aid comprising at least one ammonium salt;
   (iii) at least one second curing aid selected from tertiary amines;
   (iv) optionally, hollow microspheres;
a second part (B) comprising
   (i) at least one epoxy resin; and
   (ii) optionally, hollow microspheres.

The present disclosure further provides a curable lightweight potting adhesive composition, obtained by curing part (A) and part (B) of the curable adhesive composition precursor as described herein. Also, the present disclosure relates to a method for insert potting, comprising the following steps:
(a) Providing a curable lightweight potting adhesive composition according to the present disclosure;
(b) Drilling a hole into a honeycomb composite panel;
(c) Place an insert into the hole;
(d) Insert the potting composition into the void formed by the hole and the insert; and
(e) Allowing the potting composition to cure.

Furthermore, the present disclosure relates to a use of the curable lightweight potting adhesive composition precursor or of the curable potting composition as described herein for potting inserts, as adhesive in bonding and joining parts, edge or reinforcement filler for honeycomb composite structures.

### Detailed Description

Before any embodiments of this disclosure are explained in detail, it is to be understood that the disclosure is not limited in its application to the details of construction and the arrangement of components set forth in the following description. The compositions and methods of the disclosure are capable of other embodiments, and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of", but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The first aspect of the present disclosure is a curable lightweight potting adhesive composition precursor, comprising
a first part (A) comprising
   (i) at least one first epoxy curing agent;
   (ii) at least one first curing aid comprising at least one ammonium salt;
   (iii) at least one second curing aid selected from tertiary amines;
   (iv) optionally, hollow microspheres;
a second part (B) comprising
   (i) at least one epoxy resin; and
   (ii) (ii) optionally, hollow microspheres.

Curable lightweight potting adhesive composition precursors as the one according to the present disclosure are also known as 2-component compositions or 2k-compositions. It is understood that the first part (A) is physically separated from the second part (B) of the curable adhesive composition precursor. The first part (A) and second part (B) are combined and therefore mixed before the intended use according to the user's needs so as to obtain a curable lightweight potting adhesive composition. The present disclosure also covers a curable lightweight potting adhesive composition, obtained from the curable lightweight potting adhesive composition precursor and a cured composition obtained from curing the curable adhesive composition. The use of these 2k-compositions offers several advantages such as a longer shelf-life, the possibility to form a curable composition according to the user's needs, and a readily curable composition which itself offers further handling advantages for the user, in particular in the technical field of assembling structures from honeycomb composites including void filling, edge filling, adhesively bonding, and potting inserts.

The curable lightweight potting adhesive composition precursor according to the present disclosure may exhibit at least one or even a combination of desirable properties such as good handling properties such as having low or even no viscosity issues, fast curing times of the curable adhesive composition obtained therefrom, good mechanical strength of the cured composition while being lightweight and/or having a low cured density, and, in particular, improved properties for potting inserts. This combination of improved properties makes the composition according to the present disclosure highly suitable for applications in the aerospace, maritime and commercial industries.

The curable potting composition precursor according to the present disclosure are lightweight compositions while also exhibiting desirable bonding and compression strength. This makes the compositions as described herein highly suitable for a number of applications in the aerospace, maritime and commercial transportation industries, in particular in conjunction with honeycomb composite materials. In this regard, it is preferred that wherein a curable potting composition obtained from combing part (A) and part (B) of the curable lightweight potting adhesive composition precursor according to the present disclosure exhibits a cured density according to DIN 53479A of less than 1 g/cc, preferably of less than 0.9 g/cc, more preferably of less than 0.8 g/cc, and more preferably of less than 0.7 g/cc. This has the effect of offering improved adhesive, void filler, edge filler and potting insert materials for all application where lightweight is of importance, which is particularly true for the aerospace industry.

Epoxy curing agents suitable for use in the present disclosure are compounds which are capable of cross-linking (curing) the epoxy resin. Suitable curing agents according to the present disclosure are preferably amine-based and may be selected from primary or secondary amines. In this regard, it is preferred that the at least one first epoxy curing agent is at least one amine-based epoxy curing agent, preferably selected from diamines, polyamidoamines, phenalkamides, phenalkamines, epoxy-amine adducts, and any combinations and mixtures thereof. It is also preferred that the at least one first epoxy curing agent is selected from organic diamines, preferably from linear or branched alkyl diamines, optionally substituted aromatic diamines, optionally substituted cyclic diamines, and any combinations and mixtures thereof.

Preferably, the at least one first epoxy curing agent is contained in part (A) in an amount in the range of from 5 to 45 wt.-%, preferably from 10 to 40 wt.-%, and more preferably from 15 to 35 wt.-%, based on the total weight of part (A).

The epoxy curing agent system present in part (A) preferably comprises two epoxy curing agents, a first epoxy curing agent and a second epoxy curing agent which is distinct (i.e. chemically different) from the first epoxy curing agent. Therefore, it is preferred that part (A) further comprises at least one second epoxy curing agent distinct from the at least one first epoxy curing agent, preferably selected from preferably selected from diamines, polyamidoamines, polyetheramines, phenalkamides, phenalkamines, epoxy-amine adducts, and any combinations and mixtures thereof, and more preferably from polyetheramines and polyamidoamines, even more preferably from polyetheramine.

Preferably, the at least one second epoxy curing agent is contained in part (A) in an amount in the range of from 10 to 60 wt.-%, preferably from 15 to 55 wt.-%, and more preferably from 20 to 50 wt.-%, based on the total weight of part (A).

Without wishing to be bound by theory, it is believed that the diamine provides fast curing properties to the curable adhesive due its inherent high reactivity, while further providing excellent chemical resistance after curing with the epoxy resin.

In particular aspect, the diamine for use herein may comprise the general structure: 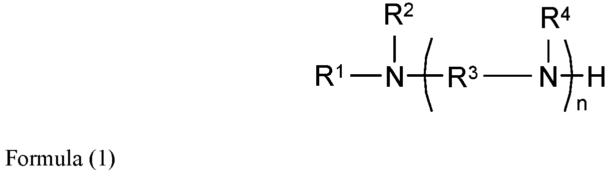 wherein
the residues R¹, R², and R⁴, independently from each other, may represent hydrogen or a hydrocarbon (such as an alkyl) or an alkoxy or a polyoxyalkyl residue containing about 1 to 15 carbon atoms;
R³ represents a polyether alkyl residue, preferably containing about 1 to 15 carbon atoms;
n represents any integer from 1 to 10.

The residues R¹, R², and R⁴ are chosen such that the amine contains two primary amine groups.

In a particular aspect, the diamine is a polyether amine having two primary amine moieties. The polyether amine may have from 1 to 12, or even from 1 to 6 catenary ether (oxygen) atoms.

In a preferred aspect, the first epoxy curing agent comprises at least one polyether amine derived from polypropylene oxide or polyethylene oxide. Exemplary polyether amines suitable for use herein are commercially available under the trade designation JEFFAMINE from Huntsman Chemicals, or TTD (4,7,10-trioxatridecane-1,13-diamine) commercially available, for example, from BASF, Ludwigshafen Germany.

Similarly, the diamine for use herein is preferably a polymeric diamine such as an amidoamine or polyamidoamine. The polyamidoamine may be branched or unbranched aromatic or branched or unbranched aliphatic. Preferably, the polyamidoamine is an aliphatic polyamidoamine. Polyamidoamines which may be advantageously used in the context of the present disclosure are obtained as described in [0010] to [0029] of EP 249527 A1.

The at least one diamine may be at least one of the above-mentioned diamines or may also comprise a mixture of at least two of those diamines.

Part (A) further comprises at least one curing aid comprising at least one ammonium salt. This has the effect that the viscosity of the adhesive composition remains in desirable ranges while the curing acceleration properties such as the ability to cure at ambient conditions of the adhesive compositions as described herein are not affected. This is in particular true when the at least one second curing aids further described herein are used in combination with the at least one curing aid. The at least one ammonium salt of the at least one first curing aid may comprise an inorganic or organic ammonium salt. In this regard, the at least one ammonium salt of the at least one first curing aid may comprise at least one organic or inorganic anion. Preferably, the at least one ammonium salt of the at least one first curing aid is an ammonium salt according to formula 1

NR¹R²R³R⁴X (formula 1)

wherein
each of R¹, R², R³ and R⁴ may be the same or different and are independently selected from H, linear or branched alkyl or alkoxy, preferably from H and linear or branched alkyl; X is selected from chloride, bromide, nitrate, sulfate, triflate, preferably from nitrate and triflate, more preferably is nitrate. Particularly preferred due to its advantageous properties and commercial availability is ammonium nitrate.

It is further preferred that the at least one first curing aid further comprises at least one metal salt. In this regard, it is preferred that the at least one metal salt comprises at least one anion selected from chloride, bromide, nitrate, sulfate, thiosulfate, triflate, phosphate, and any combinations and mixtures thereof, preferably from nitrate and triflate, and more preferably is nitrate. The at least one metal salt preferably comprises a metal cation selected from magnesium, calcium, strontium, preferably from magnesium and calcium, more preferably is calcium. Particularly preferred is calcium nitrate which yields generally good results with regard to accelerating the curing reaction with the epoxy compounds, resulting in good curing speed even at ambient conditions. In a particularly preferred example of the curable adhesive composition precursor according to the present disclosure, the at least one first curing aid comprises calcium nitrate and ammonium nitrate. This combination ensures excellent curing speed as well as good workability such as desirable viscosity of the curable adhesive compositions as described herein.

It is further preferred that part (A) further comprises at least one second curing aid different from the at least one first curing aid. Preferably, the at least one second curing aid different from the at least one first curing aid is selected from is selected form the group consisting of imidazoles, imidazole-salts, imidazolines or aromatic tertiary amines. Together with the at least one first curing aid as described herein, synergistic advantageous effects arise with regard to curing speed and application properties. Preferably, the at least one second curing aid different from the at least one first curing aid is selected from aromatic tertiary amines including those having the structure of formula (2): 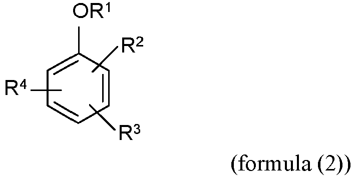 wherein
R¹ is H or alkyl, such as, e.g., methyl or ethyl, preferably methyl;
R² is CHNR⁵R⁶;
R³ and R⁴ may be, independently from each other, present or absent and when present R³ and
R⁴ are CHNR⁵R⁶;
R⁵ and R⁶ are, independent from each other, alkyl, preferably CH₃ or CH₂CH₃.

The at least one first curing aid is preferably contained in part (A) in an amount in the range of from 0.01 to 10 wt.-%, preferably from 0.05 to 7 wt.-%, more preferably 0.1 to 5 wt.-%, based on the total weight of part (A). Similarly, the at least one second curing aid is contained in part (A) in an amount in the range of from 0.1 to 15 wt.-%, preferably from 0.5 to 12 wt.-%, more preferably 1 to 10 wt.-%, based on the total weight of part (A).

Part (A) and/or part (B) of the curable compositions precursor as described herein further comprise filler materials capable of reducing the density of the composition, preferably hollow microspheres. Preferred are filler materials capable of reducing the density of the compositions. Capable of reducing the density of the composition as used herein means the filler has a lower density than the composition without the filler. Fillers capable of reducing the density of the precursor includes low density inorganic fillers, (i.e., fillers having a density of between 0.1 to 0.5 g/cm³), low density organic fillers (i.e., fillers having a density of between 0.01 to 0.30 g/cm³) but low density inorganic fillers are preferred over organic fillers because the letter tend to negatively influence the compressive strength. A combination of organic and inorganic fillers may be used but the inorganic low density fillers are preferably used in excess over the organic fillers.

The low-density inorganic fillers are preferably selected from inorganic particles, inorganic microspheres and in particular hollow inorganic microspheres. The microspheres may be selected from a variety of materials including by way of example glass, silica, ceramic (including sol-gel derived) or zirconia.

The fillers are preferably selected so that they allow for an advantageous density of the cured composition without sacrificing its compressive strength. The hollow inorganic microspheres may exhibit a density of less than 0.5 g/cm³, more preferably of between 0.12 and 0.42 g/cm³. The fillers may have an average particle size typically of less than 500 µm, or between 10 and 100 µm.

Preferred hollow inorganic microspheres include glass microspheres which are commercially available, for example, from 3M Company under the trade designation Glass bubbles D32 or Scotchlite D32/4500.

In this regard, it is preferred that part (A) comprises hollow microspheres, preferably selected from hollow glass microspheres and hollow ceramic microspheres, more preferably selected from glass bubbles. Preferably, part (A) comprises the hollow microspheres in an amount in the range of from 1 to 50 wt.-%, preferably from 5 to 45 wt.-%, and more preferably from 10 to 40 wt.-%, based on the total weight of part (A).

With regard to achieve lightweight compositions, it is preferred that part (B) comprises hollow microspheres, preferably selected from hollow glass microspheres and hollow ceramic microspheres, more preferably selected from glass bubbles. In this regard, it is preferred that part (B) comprises the hollow microspheres in an amount in the range of from 1 to 50 wt.-%, preferably from 5 to 45 wt.-%, and more preferably from 10 to 40 wt.-%, based on the total weight of part (B).

Part (A) and optionally part (B) of the curable adhesive composition precursor according to the present disclosure may further comprise at least one inorganic filler material. It is preferred that part (A) and/or part (B) further comprises at least one filler selected from graphite powder, graphite flakes, carbon black, fumed silica, fused silica, calcium oxide, calcium carbonate, magnesium oxide, magnesium carbonate, glass beads, and any mixtures and combinations thereof, preferably selected from graphite flakes, carbon black, fused silica, fumed silica, calcium carbonate, glass beads and any mixtures and combinations thereof. Part (A) may comprise the at least one inorganic filler material in an amount in the range of from 2 to 35 wt.-%, preferably from 5 to 30 wt.-%, and more preferably from 8 to 25 wt.-%, based on the total weight of part (A) of the composition described herein. Similarly, part (B) may comprise the at least one inorganic filler material filler in an amount in the range of from 2 to 35 wt.-%, preferably from 5 to 30 wt.-%, and more preferably from 8 to 25 wt.-%, based on the total weight of part (B) of the composition as described herein. The inorganic filler material may have at least one advantageous effect such as reduced density of the composition, improved flow and/or workability of the compositions. Inorganic filler materials are preferred over organic filler materials since they do not compromise the compressive strength of the compositions. In general, any inorganic filler material known in the art may be used, i.e. silica fillers, glass, ceramics and the like.

Preferably, the at least one filler material comprises at least one silica compound. Silica compounds may have the effect of giving rise to improved flow, improved workability and increased of the compositions as described herein, without sacrificing mechanical strength or resistance to water and the like of the cured adhesives obtained therefrom. In this regard, it is preferred that the at least one silica compound is selected from fused silica, fumed silica, perlite, and any combinations and mixtures thereof. Silica compounds as described herein may preferably be employed in the form of silica particles. Preferably, the silica particles comprise fumed silica, preferably hydrophobically fumed silica, fused silica, amorphous silica particles, hollow silica particles, silica gels, calcium silicates, and any combinations thereof. Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Düsseldorf, Germany); AEROSIL R-202 (a hydrophobically fumed silica available from Evonik Industries, Germany); glass-beads class IV (250-300 microns): amorphous silica (available from 3M Deutschland GmbH in Neuss, Germany); MINSIL SF 20 (available from Minco Inc., 510 Midway, Tennessee, USA); amorphous, fused silica; and APYRAL 24 ESF (epoxysilane-functionalized (2 wt.-%) aluminium trihydrate available from Nabaltec GmbH in Schwandorf, Germany). Fused silica is available, for example, under the trade designation MINSIL from Minco Inc., Midway, USA.

Furthermore, part (A) and/or part (B) preferably comprise comprises graphite flakes, preferably expandable graphite flakes. This may have advantageous fire-retardant effects. Preferably, part (A) comprises graphite flakes, preferably expandable graphite flakes, in an amount in the range of from 0.1 to 10 wt.-%, preferably from 0.5 to 8 wt.-%, and more preferably from 1 to 6 wt.-%, based on the total weight of part (A). Similarly, part (B) comprises graphite flakes, preferably expandable graphite flakes, in an amount in the range of from 0.1 to 10 wt.-%, preferably from 0.5 to 8 wt.-%, and more preferably from 1 to 6 wt.-%, based on the total weight of part (B).

In many applications, in particular in aerospace applications, it is advantageous or even required that any adhesive or filler exhibit fire-retardant and/or smoke-retardant properties. Hence, it is preferred that part (A) and/or part (B) further comprises at least one flame retardant. The at least one flame retardant is preferably selected from a red phosphorous containing compound, preferably red phosphorous powder, organophosphorous compounds, polyphosphates, such as ammonium polyphosphate, preferably encapsulated, organohalogen compounds, metal hydroxides preferably aluminium hydroxide and magnesium hydroxide, huntite, hydromagnesite, borates, and any combinations and mixtures thereof, preferably from red phosphorous containing compounds, organophosphorous compounds, polyphosphates, such as ammonium polyphosphate, preferably encapsulated, and metal hydroxides, preferably metal hydroxides, and any combinations and mixtures thereof. The at least one flame retardant is preferably contained in part (A) in an amount in the range of from 0.1 to 25 wt.-%, preferably from 0.5 to 20 wt.-%, more preferably from 1 to 15 wt.-%, based on the total weight of part (A). Similarly, it is preferred that the at least one flame retardant is contained in part (B) in an amount in the range of from 0.1 to 20 wt.-%, preferably from 0.5 to 15 wt.-%, more preferably from 1 to 10 wt.-%, based on the total weight of part (B). The presence of the at least one flame retardant, in particular in the amounts as described herein in the compositions as described herein yield compositions having good or even excellent fire retardant properties as desired or required for compositions designated for aerospace applications.

The second part (B) of the curable adhesive composition precursor according to the present disclosure comprises at least one first epoxy resin, and optionally at least one second epoxy resin. Suitable epoxy resins for use herein will be easily identified by those skilled in the art, in the light of the present description.

The epoxy resin for use herein is not particularly limited. Epoxy resins are polymers having one or more epoxy-functionality. Typically but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxygroups-containing polymers. The epoxy-functionalities allow the resin to undertake cross-linking reactions. The epoxy resins may have an average epoxy-functionality of at least 1, greater than one, or of at least 2.

Any epoxy resins well known to those skilled in the art may be used in the context of the present disclosure. Epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane,dihydroxydiphenyldimethylmethane, dihydroxydiphenylethylmethylm ethane, dihydroxydiphenylmethylpropylmethane, dihydroxydiphenylethylphenyl-methane,dihydroxydiphenylpropylenphenylmethane, dihydroxydiphenylbutylphenyl-methane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by the formula below wherein n denotes the repeating unit (in case of n= 0 the formula below represents the diglycidyl ether of bisphenol A):

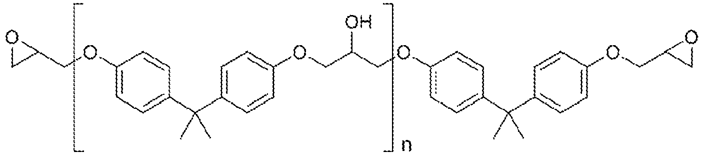

Typically, the epoxy resins are blends of several resins. Accordingly, n in the formula above may represent an average value of the blend, and may not be an integer but may include values like, for example and not limited thereto, 0.1 to 2.5.

Typically, the epoxy resin is liquid. The epoxy resins may include solid epoxy resins, used in dissolved form, or dispersed, for example in another liquid resin. Preferably, the epoxy resin is liquid at ambient conditions (23 °C, 1 bar). The epoxy resins may contain halogens, preferably bromine atoms to make them less flammable.

Examples of suitable and commercially available epoxy resins include diglycidylether of bisphenol A (available under the trade designation EPON 828, EPON 830, EPON 1001 or EPIKOTE 828 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Cycloaliphatic epoxy resins are commercially available under the trade designation EPINOX (Hexion Specialty Chemicals GmbH).

Preferably, part (B) of the compositions as described herein comprise the at least one first epoxy resin in an amount in the range of from 30 to 80 wt.-%, preferably from 35 to 75 wt.-%, more preferably from 40 to 70 wt.-%, based on the total weight of part (B).

It is further preferred that part (A) and/or part (B) of the curable lightweight potting precursor according to the present disclosure, preferably part (B) comprises at least one epoxy-reactive diluent and/or at least one wetting agent. Preferably, the at least one epoxy-reactive diluent is an epoxy-based reactive diluent. Such reactive diluents are epoxy-containing molecules. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the flow characteristics of the curable compositions as described herein.

In a particular aspect of the present disclosure, wherein the epoxy-based reactive diluent for use herein has a saturated or unsaturated cyclic backbone, and preferably comprises glycidyl ether as reactive terminal end portions.

According to a preferred aspect, the epoxy-based reactive diluent for use herein is preferably selected from the group consisting of diglycidyl ether of resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion) and the "Epodil" series (available from Air Products and Chemical Inc, Allentown, PA, USA) including in particular EPODIL 746, EPODIL 747, EPODIL 748 and EPODIL 757.

Preferably, part (B) of the curable lightweight potting adhesive composition precursor according to the present disclosure comprises the at least one reactive diluent in an amount in the range of from 0.5 to 25 wt.-%, preferably from 1 to 20 wt.-%, more preferably from 2 to 15 wt.-%, based on the total weight of part (B).

The at least one wetting agent is preferably selected from silanes, preferably from epoxy silanes. Including the at least one wetting agent into part (A) and/or part (B) of the curable composition precursors as described herein has the effect of improved wetting of the surfaces of the substrate treated with the composition according to the present disclosure. That is, improved adhesion of the cured composition onto the substrate may be achieved. Also, improved wetting of substrate surfaces may be advantageous on a number of substrates. This may be true for a number of composite or some metal surfaces, and for surfaces having complex or uneven shapes.

Furthermore, it is desirable to adapt the viscosity to the needs of the respective application. In general, it is desirable that upon combination of part (A) and part (B) into a curable lightweight potting adhesive composition said composition may be easily extruded and applied onto surfaces or into voids or hollow edges of substrates. Oftentimes, compositions for these applications are applied manually, so forces available for extruding the composition from hand-held cartridge devices are naturally limited. Therefore, it is preferred that the curable compositions according to the present disclosure exhibit an extrusion rate of at least 30 g/min, preferably of at least 40 g/min, and more preferably of at least 50 g/min. The extrusion rate may be determined as described in the experimental section of this disclosure. For further adapting the viscosity of the curable composition as described herein, part (B) of the curable composition precursor may further comprise at least one viscosity modifier. Preferably, the at least one viscosity modifier is selected from partially or fully hydrogenated epoxy resins, phosphoric acid polyesters, silanes, more preferably from phosphoric acid polyesters, and any combinations and mixtures thereof. It is further preferred that part (B) comprises the at least one viscosity modifier in an amount in the range of from 0.1 to 15 wt.-%, preferably from 0.2 to 10 wt.-%, more preferably from 0.5 to 5 wt.-%, based on the total weight of part (B).

The curable lightweight potting adhesive composition precursor as described herein comprises part (A) and part (B) physically separated from another, usually in the form of a set comprising cartridges for parts (A) and (B) and a mixing nozzle. In the mixing nozzle, part (A) and (B) are combined and mixed in situ into a curable lightweight potting adhesive composition in a certain ratio of part (A) to part (B). Preferably, the ratio by volume of part (A) to part (B) is in the range of from 5:1 to 1: 12, preferably from 3:1 to 1:10, and more preferably from 1:1 to 1:5, and even more preferably is about 1:2.

The present disclosure further provides a curable lightweight potting adhesive composition, obtained from combining part (A) and part (B) of the curable lightweight potting adhesive composition precursor. For a number of applications in conjunction with lightweight manufacturing processes, in particular comprising the use of honeycomb composite panels, the curable potting composition as described herein is exhibiting excellent properties. In particular, it is preferred that the curable composition according to the present disclosure exhibits after curing a density according to ASTM D1622 of less than 1 g/cc, preferably of less than 0.9 g/cc, more preferably of less than 0.8 g/cc, and more preferably of less than 0.7 g/cc, and/or a compression strength according to ASTM D695 at 23 °C of at least 40 MPa, preferably of at least 41 MPa, and more preferably of at least 42 MPa, and/or an overlap shear strength according to DIN EN 1465 of at least 12 MPa, preferably of at least 13 MPa, and more preferably of at least 14 MPa.

Hardware inserts are widely used in aircraft interior part to fasten panels to each other and in fact anywhere else where fasteners are needed. The insert potting application is quite intensive and timeconsuming process. In general, in the prior art the process is summarized in following steps:
1. Drill a wide hole into the honeycomb composite panel;
2. Fill the hole with a low-density void filler composition;
3. After curing of the void filler composition, drill a hole in the void filler suiting the insert dimension;
4. Place an insert into the hole obtained in step 3, and inject a paste adhesive to bond insert to the cured void filler.

The use of the void filler in this process according to the prior art is mainly due to it is light-weight characteristic. The use of the paste adhesive is due to its high bonding properties. Thus, two different epoxy compositions are used in the prior art, which further complicates the process.

However, due to its combination of properties, the curable potting composition according to the present disclosure is able to act as both void filler and as adhesive holding the insert in place. Therefore, a much more efficient process for insert potting is achieved.

Accordingly, the present disclosure further provides a method for insert potting, comprising the following steps:
(a) Providing a curable lightweight potting adhesive composition according to the present disclosure;
(b) Drilling a hole into a honeycomb composite panel;
(c) Place an insert into the hole;
(d) Insert the potting composition into the void formed by the hole and the insert; and
(e) Allowing the potting composition to cure.

The advantage is that the process according to the present disclosure is much simplified, only one potting composition is used, which greatly speeds up the process and allows for savings on material, equipment, time and training of personnel. Honeycomb composite panels used in the present process are well-known in the art per se. This is also true for methods and equipment for drilling holes as well as for the inserts to be potted. Basically, any inserts known in the art may be potted and used in the method as described herein, respectively. Preferably, the insert is a hardware insert used in the manufacture of aeroplanes. With regard to curing to the curable potting composition, it is preferred that the curing step is carried out at a temperature in the range of from 15 to 40 °C, preferably from 18 to 35 °C, and more preferably from 20 to 30 °C. This has the advantage that no additional equipment for heating up the panel or composition is required. That is, the method as described herein may be carried out at ambient conditions.

The present disclosure further provides a use of the curable lightweight potting adhesive composition precursor or of the curable potting composition as described herein for potting inserts, as adhesive in bonding and joining parts, edge or reinforcement filler for honeycomb composite structures. Preferably, the use comprises a use in honeycomb composites in the aerospace industry, the shipbuilding industry, the automotive industry, or the commercial transportation industry, preferably in the aerospace industry.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### EXAMPLES

### Materials used:

| Raw Material | Discription | Role |
|---|---|---|
| Epikote 232 | Bis Phenol A/F epoxy resin | Base resin |
| Disparlon 6500 | Polyamide wax | Slump resistant |
| Epodil 757 | Glycidyl ether of cyclohexane dimethanol | Reactive diluent |
| BYK W 9010 | Copolymer with acidic groups | Dispersing additive |
| Kronos 1230 | Titanium Dioxide | Pigment |
| Exolit RP6500 | Encapsulated red Phosphorus in Epoxy resin | Flame retardant |
| Exolit AP462 | Micro-encapsulated ammonium polyphosphate | Flame retardant |
| Glass bubbles | Glass microspheres | Light weight filler |
| Graphite Flakes | Expandable graphite | Flame retardant |
| TTD | Trioxa tridecan diamine (TTD) | Curing agent |
| Ancamine 2422 | Benzene-1,3-dimethaneamine (MXDA) | Curing agent |
| Calcium nitrate hydrate | Calcium nitrate tetrahydrate | Curing aid |
| Versamine EH50 | Teriary amine | Curing aid |
| Ancamine K54 | tris- (dimethylaminomethyl) phenol | Curing aid |
| Calcium ammonium nitrate hydrate | Calcium ammonium nitrate hydrate | Curing aid |
| Aerosil R202 | Fumed Silica | Filler |

### Test Methods

### Cure rate

Cure rate was determined by measuring overlap shear strengths as set forth below (apart from the curing procedure described). The samples were coated with the mixed adhesive compositions and allowed to cure at room temperature. Overlap shear strengths was then tested after certain intervals. Comparing the shear strength over time provides an indication of the cure rate, i.e. a comparison of cure rate of different examples and comparative examples over time.

### Extrusion Rate

The processability of the curable composition was evaluated at room temperature (23 °C) by extruding it through standard equipment using the following procedure. An air driven application pistol (available from SEMCO, East Kilbride, U.K) was fitted with a 150 ml disposable cartridge and a nozzle having an aperture of 4 mm. The disposable cartridge was filled with the curable composition and by applying an air pressure of 4 bars the curable composition was extruded. The extrusion rate was determined by measuring the quantity extruded in 15 seconds.

Measurements were made immediately after the curable composition was prepared (initial extrusion rate). Each curable composition was evaluated 3 times and the results averaged.

### Overlap Shear Strength according to DIN EN 1465 (issued 2009)

Overlap shear strength is determined according to DIN EN 1465 using a Zwick Z050 tensile tester (commercially available by Zwick GmbH & Co. KG, Ulm, Germany) operating at a cross head speed of 10 mm/min on dry lubed coated aluminium substrates having the following dimension 100 mm X 25mm X 0.8 mm and coated with 3 g/m² Oil (PL 3802-39S commercially available from Fuchs Petrolub AG, Germany). For the preparation of an Overlap Shear Strength test assembly the epoxy film to be tested (having a thickness of 0.4 mm) is applied on one end of a first steel strip and covered by a second steel strip forming an overlap joint of 10 mm. The overlap joints are then clamped together using two binder clips and the test assemblies placed into an air circulating oven with a minimum baking cycle of 20 min at 160 °C and a maximum bake cycle of 45 min at 200 °C. Hereby the test assemblies are heated up and cooled down using 3 °C/minute ramps. Test assemblies are then conditioned for 24 hours at ambient condition 23 +/-2 °C and 50 +/- % % relative humidity before testing. The tests assemblies are placed prior to testing on the Zwick tensile tester into an environmental chamber (commercially available by RS Simulatoren, Oberhausen, Germany) and the Overlap shear strength measured at room temperature (23°C +/- 2°C). 3 samples are measured for each of the examples at the three different test temperatures and results averaged and reported in MPa.

### Adhesive peel strength according to ASTM 1876 (issued 2008)

The Adhesive Peel strength is measured on dry lubed coated aluminium substrates having the following dimension 15 0mm X 25 mm X 0.8 mm and coated with 3 g/m² Oil (PL 3802-39s commercially available from Fuchs Petrolub AG, Germany) according to ASTM 1876 using a Zwick Z050 tensile tester (commercially available by Zwick GmbH & Co. KG, Ulm, Germany). The cross head speed is set for all measurements to 100 mm/min and adhesive peel strength measured at 23°C +/- 2°C and a relative humidity of 50 +/- 5 %. For test assembly preparation a masking tape (Scotch^{™} 2610 Masking Tape, commercially available from 3M, USA) is applied to a first steel strip. Hereby the masking tape is applied to visualize the bond area. The bond area has a dimension of 100mm X 25mm. The example material to be tested is then applied to the marked bond area and covered by a second steel strip having the same dimension as the first one. The two strips are hereafter first manually pressed together and then clamped together using 2 binder clips along the bond line, in order to hold the test assembly in place. The test assemblies are cured for with a minimum baking cycle of 20 min at 160 °C and a maximum bake cycle of 45 min at 200 °C in an air circulating oven. Hereby the test assemblies are heated up and cooled down using 3°C/minute ramps. Test assemblies are then conditioned for 24 hours at ambient condition 23 +/-2°C and 50 +/-5 % relative humidity before testing. Per example material, 3 adhesive peel strength test assemblies are prepared and the test results averaged. Test results are reported in N/25mm.

### Cured Density

Density of the cured epoxy-based compositions was measured according to DIN 53479A. Samples of the epoxy-based composition were prepared by casting the corresponding precursors into moulds and cured at ambient temperature for at least 48 h. The cured samples of the epoxy-based composition were removed from the moulds and their exact dimensions recorded. Each sample was weighted and the density calculated and recorded in grams per cm³.

### Compressive Strength according to ISO 604

200 g of the curable composition were cast into a release-coated mould having the dimensions of 12.5 mm (height) x 12.5 mm (width) x 25 mm (length) and being open on one major side. The curable composition was then allowed to cure for 48 h at room temperature.

All test specimens were compressed along their 25 mm axis at a rate of 0.5 mm/min by using a Zwick Model Z050 Tensile Tester (Zwick GmbH & CO., Ulm, Germany), equipped with heating capability.

Compressive strength was measured at 23 °C (room temperature). The test specimens were preconditioned in room temperature for at least 30 minutes before testing.

Six samples were measured for each epoxy composition. The results were averaged and recorded in MPa.

### Preparation of part (A) and part (B)

The ingredients as set forth in tables 1 and 2 were used to prepare part (A) and part (B) according to the procedures set forth below.

**Table 1: Composition of part (A). All ratios given in wt.-%.**

| **Part A** | **Ex. 1** | **Comp. Ex. 1** |
|---|---|---|
| Ancamine 2422 | 20 | 25 |
| Baxxdur EC130 | 40 | 25 |
| Calcium nitrate | 0 | 5.5 |
| Calcium nitrate/ammonium nitrate 1:1 | 1 | 0 |
| Versamine EH50 | 0 | 10 |
| Ancamine K54 | 4 | 0 |
| Aluminum Hydrate | 0 | 10.5 |
| Exolit AP462 | 8 | 0 |
| Polyamide Wax | 0.5 | 1 |
| Expandable graphite | 2 | 0 |
| Glass bubbles | 20 | 23 |
| Aerosil R202 | 4.5 | 0 |
| Total | 100 | 100 |

**Table 2: Composition of part (B). All ratios given in wt.-%.**

| **Part B** | **Ex. 1** | **Comp. Ex. 1** |
|---|---|---|
| Epon 232 | 53 | 32 |
| Polyamide wax | 1 | 1 |
| Epodil 757 | 10 | 17 |
| Exolit RP6500 | 2 | 2 |
| Epoxy Silane | 0 | 3 |
| Dispersion additive | 1 | 1 |
| Expandable Graphite | 3 | 4 |
| Filler | 3 | 4 |
| Aluminum Trihydrate | 0 | 9 |
| Exolit AP462 | 7 | |
| Glass bubbles | 18 | 27 |
| Aerosil R202 | 2 | |
| Total | 100 | 100 |

### Part A:

Part (A) was prepared by adding the calcium nitrate (comp. ex. 1) or the calcium nitrate/ammonium nitrate mixture) to the main curing agent and mixed for 2 minutes in a speed mixer (3000 U/min). After complete dispersion of the calcium nitrates the fillers were then added and mixing continued for further 2 minutes. This was followed by addition and mixing of ancamine K54 (ex. 1) or versamine EH10 (comp. ex. 1). In a last step, part (A) was degassed for 2 minutes under vacuum while mixing. The degassed part A was then filled into one side of a 200 mL dual Pac cartridge.

### Part B:

The base resin was manufactured by mixing the epoxy resins and flame retardants in a speed mixer for 1 minute. The fillers were added then step-wise and mixed several times until a homogeneous mixture was obtained. The mixture is then degassed for 2 minutes under vacuum while mixing. The degassed part B was filled into the other side of the dual Pac cartridge. The mixing ratios part (A) to part (B) by volume were 1:2.

### Evaluation:

The extrusion rate, cured density, compression strength, and overlap shear strength were tested. As comparative example Comp. Ex. 1, a commercially available 2K epoxy structural adhesive composition was used. The results are summarized in table 3.

| Parameters | Test Method | Comp. Ex. 1 | Ex. 1 |
|---|---|---|---|
| Extrosion | Dual pack Cartridge | 45 g/min | 70 g/min |
| Cured Density | DIN 53479A | 0.60 g/cc | 0.66 g/cc |
| Compressive Strength at 23 °C | ISO 604 | 45 Mpa | 44 MPa |
| Overlap shear strength | DIN EN 1465 | 11 MPa | 15 MPa |

## Claims

1. A curable lightweight potting adhesive composition precursor, comprising
a first part (A) comprising
(i) at least one first epoxy curing agent;
(ii) at least one first curing aid comprising at least one ammonium salt;
(iii) at least one second curing aid selected from tertiary amines;
(iv) optionally, hollow microspheres;
a second part (B) comprising
(i) at least one epoxy resin; and
(ii) optionally, hollow microspheres.

2. The curable lightweight potting adhesive composition precursor according to claim 1, wherein a curable potting composition obtained from combing part (A) and part (B) of the curable lightweight potting adhesive composition precursor according to claim 1 exhibits a cured density according to ASTM D1622 of less than 1 g/cc, preferably of less than 0.9 g/cc, more preferably of less than 0.8 g/cc, and more preferably of less than 0.7 g/cc.

3. The curable lightweight potting adhesive composition precursor according to claim 1 or claim 2, wherein the at least one first epoxy curing agent is at least one amine-based epoxy curing agent, preferably selected from diamines, polyamidoamines, phenalkamides, phenalkamines, epoxy-amine adducts, and any combinations and mixtures thereof.

4. The curable lightweight potting adhesive composition precursor according to claim 3, wherein the at least one first epoxy curing agent is selected from organic diamines, preferably from linear or branched alkyl diamines, optionally substituted aromatic diamines, optionally substituted cyclic diamines, and any combinations and mixtures thereof.

5. The curable lightweight potting adhesive composition precursor according to any one of the preceding claims, wherein the at least one ammonium salt of the at least one first curing aid comprises an inorganic or organic ammonium salt.

6. The curable lightweight potting adhesive composition precursor according to any one of the preceding claims, wherein the at least one ammonium salt of the at least one first curing aid comprises at least one organic or inorganic anion.

7. The curable lightweight potting adhesive composition precursor according to any one of the preceding claims, wherein the at least one ammonium salt of the at least one first curing aid is an ammonium salt according to formula 1
NR¹R²R³R⁴X (formula 1)
wherein
each of R¹, R² , R³ and R⁴ may be the same or different and are independently selected from H, linear or branched alkyl or alkoxy, preferably from H and linear or branched alkyl;
X is selected from chloride, bromide, nitrate, sulfate, triflate, preferably from nitrate and triflate, more preferably is nitrate.

8. The curable lightweight potting adhesive composition precursor according to any one of the preceding claims, wherein the at least one first curing aid further comprises at least one metal salt.

9. The curable lightweight potting adhesive composition precursor according to claim 8, wherein the at least one metal salt comprises a metal cation selected from magnesium, calcium, strontium, preferably from magnesium and calcium, more preferably is calcium.

10. The curable lightweight potting adhesive composition precursor according to claim 8 or claim 9, wherein the at least one first curing aid comprises calcium nitrate and ammonium nitrate.

11. The curable lightweight potting adhesive composition precursor according to any one of the preceding claims, wherein the at least one second curing aid is selected from aromatic amines, preferably from phenolic amines.

12. The curable lightweight potting adhesive composition precursor according to any one of the preceding claims, wherein part (A) and/or part (B) comprise hollow microspheres, preferably selected from hollow glass microspheres and hollow ceramic microspheres, more preferably selected from glass bubbles.

13. A curable lightweight potting composition, obtained from combining part (A) and part (B) of the curable potting precursor according to any one of the preceding claims.

14. A method for insert potting, comprising the following steps:
(a) Providing a curable lightweight potting adhesive composition according to claim 13;
(b) Drilling a hole into a honeycomb composite panel;
(c) Place insert into the hole;
(d) Insert the potting composition into the void formed by the hole and the insert; and
(e) Allowing the potting composition to cure.

15. Use of the curable lightweight potting adhesive composition precursor according to any one of claims 1 to 12 or of the curable potting composition according to claim 13 for potting inserts, as adhesive in bonding and joining parts, edge or reinforcement filler for honeycomb composite structures.

## Patentansprüche

1. Ein Vorläufer einer härtbaren, leichten Vergussklebstoffzusammensetzung, umfassend einen ersten Teil (A), umfassend
(i) mindestens ein erstes Epoxidhärtungsmittel;
(ii) mindestens ein erstes Härtungshilfsmittel, umfassend mindestens ein Ammoniumsalz;
(iii) mindestens ein zweites Härtungshilfsmittel, das aus tertiären Aminen ausgewählt ist;
(iv) optional hohle Mikrokugeln;
einen zweiten Teil (B), umfassend
(i) mindestens ein Epoxidharz; und
(ii) optional hohle Mikrokugeln.

2. Der Vorläufer einer härtbaren, leichten Vergussklebstoffzusammensetzung nach Anspruch 1, wobei eine härtbare Vergusszusammensetzung, die durch Kombinieren von Teil (A) und Teil (B) des Vorläufers einer härtbaren, leichten Vergussklebstoffzusammensetzung nach Anspruch 1 erhalten wird, eine gehärtete Dichte gemäß ASTM D1622 von weniger als 1 g/cm³, vorzugsweise von weniger als 0,9 g/cm³, mehr bevorzugt von weniger als 0,8 g/cm³ und mehr bevorzugt von weniger als 0,7 g/cm³ vorweist.

3. Der Vorläufer einer härtbaren, leichten Vergussklebstoffzusammensetzung nach Anspruch 1 oder 2, wobei das mindestens eine erste Epoxidhärtungsmittel mindestens ein Epoxidhärtungsmittel auf Aminbasis ist, vorzugsweise ausgewählt aus Diaminen, Polyamidoaminen, Phenalkamiden, Phenalkaminen, Epoxid-Amin-Addukten und beliebigen Kombinationen und Mischungen davon.

4. Der Vorläufer einer härtbaren, leichten Vergussklebstoffzusammensetzung nach Anspruch 3, wobei das mindestens eine erste Epoxidhärtungsmittel aus organischen Diaminen, vorzugsweise aus linearen oder verzweigten Alkyldiaminen, gegebenenfalls substituierten aromatischen Diaminen, gegebenenfalls substituierten zyklischen Diaminen und beliebigen Kombinationen und Mischungen davon ausgewählt ist.

5. Der Vorläufer einer härtbaren, leichten Vergussklebstoffzusammensetzung nach einem der vorstehenden Ansprüche, wobei das mindestens eine Ammoniumsalz des mindestens einen ersten Härtungshilfsmittels ein anorganisches oder organisches Ammoniumsalz umfasst.

6. Der Vorläufer einer härtbaren, leichten Vergussklebstoffzusammensetzung nach einem der vorstehenden Ansprüche, wobei das mindestens eine Ammoniumsalz des mindestens einen ersten Härtungshilfsmittels mindestens ein organisches oder anorganisches Anion umfasst.

7. Der Vorläufer einer härtbaren, leichten Vergussklebstoffzusammensetzung nach einem der vorstehenden Ansprüche, wobei das mindestens eine Ammoniumsalz des mindestens einen ersten Härtungshilfsmittels ein Ammoniumsalz gemäß Formel 1 ist
NR¹R²R³R⁴X (Formel 1)
wobei
jedes von R¹, R², R³ und R⁴ gleich oder unterschiedlich sein können und aus H, linearem oder verzweigtem Alkyl oder Alkoxy, vorzugsweise aus H und linearem oder verzweigtem Alkyl unabhängig ausgewählt sind;
X aus Chlorid, Bromid, Nitrat, Sulfat, Triflat, vorzugsweise aus Nitrat und Triflat ausgewählt ist, mehr bevorzugt Nitrat ist.

8. Der Vorläufer einer härtbaren, leichten Vergussklebstoffzusammensetzung nach einem der vorstehenden Ansprüche, wobei das mindestens eine erste Härtungshilfsmittel ferner mindestens ein Metallsalz umfasst.

9. Der Vorläufer einer härtbaren, leichten Vergussklebstoffzusammensetzung nach Anspruch 8, wobei das mindestens eine Metallsalz ein Metallkation umfasst, das aus Magnesium, Calcium, Strontium, vorzugsweise aus Magnesium und Calcium ausgewählt ist, mehr bevorzugt Calcium ist.

10. Der Vorläufer einer härtbaren, leichten Vergussklebstoffzusammensetzung nach Anspruch 8 oder 9, wobei das mindestens eine erste Härtungshilfsmittel Calciumnitrat und Ammoniumnitrat umfasst.

11. Der Vorläufer einer härtbaren, leichten Vergussklebstoffzusammensetzung nach einem der vorstehenden Ansprüche, wobei das mindestens eine zweite Härtungshilfsmittel aus aromatischen Aminen, vorzugsweise aus phenolischen Aminen ausgewählt ist.

12. Der Vorläufer einer härtbaren, leichten Vergussklebstoffzusammensetzung nach einem der vorstehenden Ansprüche, wobei Teil (A) und/oder Teil (B) hohle Mikrokugeln umfassen, vorzugsweise ausgewählt aus hohlen Glasmikrokugeln und hohlen Keramikmikrokugeln, mehr bevorzugt ausgewählt aus Glasblasen.

13. Eine härtbare, leichte Vergusszusammensetzung, die durch Kombinieren von Teil (A) und Teil (B) des härtbaren Vergussvorläufers nach einem der vorstehenden Ansprüche erhalten wird.

14. Ein Verfahren zum Vergießen von Einsätzen, umfassend die folgenden Schritte:
(a) Bereitstellen einer härtbaren, leichten Vergussklebstoffzusammensetzung nach Anspruch 13;
(b) Bohren eines Lochs in eine Wabenverbundplatte;
(c) Platzieren eines Einsatzes in das Loch;
(d) Einsetzen der Vergusszusammensetzung in den Hohlraum, der durch das Loch und den Einsatz gebildet wird; und
(e) Ermöglichen der Vergusszusammensetzung zu härten.

15. Verwendung des Vorläufers einer härtbaren, leichten Vergussklebstoffzusammensetzung nach einem der Ansprüche 1 bis 12 oder der härtbaren Vergusszusammensetzung nach Anspruch 13 zum Vergießen von Einsätzen, als Klebstoff bei Klebe- und Verbindungsteilen, Rand- oder Verstärkungsfüller für Wabenverbundstrukturen.

## Revendications

1. Précurseur de composition adhésive d'empotage légère durcissable, comprenant une première partie (A) comprenant
(i) au moins un premier agent de durcissement époxy ;
(ii) au moins un premier adjuvant de durcissement comprenant au moins un sel d'ammonium ;
(iii) au moins un second adjuvant de durcissement choisi parmi des amines tertiaires ;
(iv) facultativement, des microsphères creuses ;
une seconde partie (B) comprenant
(i) au moins une résine époxy ; et
(ii) facultativement, des microsphères creuses.

2. Précurseur de composition adhésive d'empotage légère durcissable selon la revendication 1, dans lequel une composition d'empotage durcissable obtenue en combinant la partie (A) et la partie (B) du précurseur de composition adhésive d'empotage légère durcissable selon la revendication 1 présente une densité à l'état durci selon la norme ASTM D1622 de moins de 1 g/cm³, de préférence de moins de 0,9 g/cm³, plus préférablement de moins de 0,8 g/cm³, et plus préférablement de moins de 0,7 g/cm³.

3. Précurseur de composition adhésive d'empotage légère durcissable selon la revendication 1 ou la revendication 2, dans lequel l'au moins un premier agent de durcissement époxy est au moins un agent de durcissement époxy à base d'amine, de préférence choisi parmi des diamines, polyamido-amines, phénalkamides, phénalkamines, adduits époxy-amine, et combinaisons et mélanges quelconques de ceux-ci.

4. Précurseur de composition adhésive d'empotage légère durcissable selon la revendication 3, dans lequel l'au moins un premier agent de durcissement époxy est choisi parmi des diamines organiques, de préférence parmi des alkyldiamines linéaires ou ramifiées, des diamines aromatiques facultativement substituées, des diamines cycliques facultativement substituées, et des combinaisons et mélanges quelconques de celles-ci.

5. Précurseur de composition adhésive d'empotage légère durcissable selon l'une quelconque des revendications précédentes, dans lequel l'au moins un sel d'ammonium de l'au moins un premier adjuvant de durcissement comprend un sel d'ammonium inorganique ou organique.

6. Précurseur de composition adhésive d'empotage légère durcissable selon l'une quelconque des revendications précédentes, dans lequel l'au moins un sel d'ammonium de l'au moins un premier adjuvant de durcissement comprend au moins un anion organique ou inorganique.

7. Précurseur de composition adhésive d'empotage légère durcissable selon l'une quelconque des revendications précédentes, dans lequel l'au moins un sel d'ammonium de l'au moins un premier adjuvant de durcissement est un sel d'ammonium selon la formule 1
NR¹R²R³R⁴X (formule 1)
dans laquelle
R¹, R², R³ et R⁴ peuvent chacun être identiques ou différents et sont choisis indépendamment parmi H, alkyle ou alcoxy linéaire ou ramifié, de préférence parmi H et alkyle linéaire ou ramifié ;
X est choisi parmi chlorure, bromure, nitrate, sulfate, triflate, de préférence parmi nitrate et triflate, plus préférablement est le nitrate.

8. Précurseur de composition adhésive d'empotage légère durcissable selon l'une quelconque des revendications précédentes, dans lequel l'au moins un premier adjuvant de durcissement comprend en outre au moins un sel métallique.

9. Précurseur de composition adhésive d'empotage légère durcissable selon la revendication 8, dans lequel l'au moins un sel métallique comprend un cation métallique choisi parmi magnésium, calcium, strontium, de préférence parmi magnésium et calcium, plus préférablement est le calcium.

10. Précurseur de composition adhésive d'empotage légère durcissable selon la revendication 8 ou la revendication 9, dans lequel l'au moins un premier adjuvant de durcissement comprend du nitrate de calcium et du nitrate d'ammonium.

11. Précurseur de composition adhésive d'empotage légère durcissable selon l'une quelconque des revendications précédentes, dans lequel l'au moins un second adjuvant de durcissement est choisi parmi des amines aromatiques, de préférence des amines phénoliques.

12. Précurseur de composition adhésive d'empotage légère durcissable selon l'une quelconque des revendications précédentes, dans lequel la partie (A) et/ou la partie (B) comprennent des microsphères creuses, de préférence choisies parmi des microsphères de verre creuses et des microsphères céramiques creuses, plus préférablement choisies parmi des bulles de verre.

13. Composition d'empotage légère durcissable, obtenue en combinant la partie (A) et la partie (B) du précurseur d'empotage durcissable selon l'une quelconque des revendications précédentes.

14. Procédé d'empotage d'insert, comprenant les étapes suivantes :
(a) la fourniture d'une composition adhésive d'empotage légère durcissable selon la revendication 13 ;
(b) le perçage d'un trou dans un panneau composite en nid d'abeille ;
(c) le placement d'un insert dans le trou ;
(d) l'insertion de la composition d'empotage dans le vide formé par le trou et l'insert ; et
(e) le fait de laisser durcir la composition d'empotage.

15. Utilisation du précurseur de composition adhésive d'empotage légère durcissable selon l'une quelconque des revendications 1 à 12 ou de la composition d'empotage durcissable selon la revendication 13 pour l'empotage d'inserts, en tant qu'adhésif dans le collage et l'assemblage de parties, charge de bord ou de renforcement pour des structures composites en nid d'abeille.
